# EUROPEAN PATENT APPLICATION

(11) **EP 4 389 702 A1**
(43) Date of publication of application: **26.06.2024**
(21) Application number: 22956336.6
(22) Date of filing: 14.12.2022
(51) Int. Cl.: C01B 32/318, H01G 11/12, C10G 67/00

(54) **POROUS CARBON MATERIAL, AND PREPARATION METHOD THEREFOR AND USE THEREOF**

(30) Priority: 22.08.2022 CN 202211007821
(71) Applicant: PetroChina Company Limited, Dongcheng District Beijing 100007 (CN)
(72) Inventor: LI, Shengping, Beijing 100007 (CN); WANG, Luhai, Beijing 100007 (CN); SONG, Haipeng, Beijing 100007 (CN); LIU, Yindong, Beijing 100007 (CN); CAO, Yuting, Beijing 100007 (CN); WANG, Litao, Beijing 100007 (CN); XU, Qian, Beijing 100007 (CN)
(74) Representative: Vossius & Partner Patentanwälte Rechtsanwälte mbB
(86) International application number: PCT/CN2022/138928
(87) International publication number: WO 2024/040803

(57) **Abstract**

The present application provides a porous carbon material and a preparation method and application thereof, which includes following steps: choosing a distillate of ethylene tar in a range of 250 °C~550 °C and performing hydrogenation treatment on the distillate to obtain hydrofined ethylene tar; performing pre-carbonization treatment on part of the hydrofined ethylene tar to obtain coke; mixing the remaining hydrofined ethylene tar and the coke to form a mixture, and performing activating treatment on the mixture to obtain the porous carbon material. The present application can realize the preparation of high purity porous carbon with simple preparation process and low cost.

## Description

The present application claims priority to Chinese Patent Application No. 202211007821.9, filed with China National Intellectual Property Administration on August 22, 2022, entitled "Porous Carbon Material and Preparation Method and Application Thereof. The aforementioned patent application is hereby incorporated by reference in its entirety.

### TECHNICAL FIELD

The present application relates to the technical field of carbon materials, and in particular to a porous carbon material and a preparation method and application thereof.

### BACKGROUND

Electric Double Layer Capacitor (Electric Double Layer Capacitor, EDLC) is a new type of energy storage device with high power density and excellent cycle stability. Porous carbon is widely used as an electrode material of the electric double layer capacitor.

The electric double layer capacitor uses a double layer structure composed of a porous carbon electrode and an electrolyte to obtain super capacitance. In the electric double layer capacitor, the porous carbon material is used to make the electrode. The supercapacitor stores electric energy by adsorbing ions in the electrolyte solution by porous carbon, and releases the electric energy by desorbing ions in the electrolyte solution by porous carbon. The adsorption and desorption are simple physical processes, and theoretically, the porous carbon material has almost unlimited charge and discharge life, but the porous carbon material often has low purity and contains a large number of impurities, such as non-metallic elements such as sulfur, nitrogen and oxygen, as well as metal elements such as iron, nickel and magnesium. These impurities will react with solvents or solutes in the electrolyte solution, resulting in poor stability of devices and reducing the capacity and service life of devices.

Raw materials, additives, and conditions of the preparation process for porous carbon have a great influence on the purity of porous carbon. The main raw materials for the preparation of porous carbon are biomass, coal or petroleum processing derivatives. Among them, biomass and coal contain more impurities such as ash and heavy metals, which are difficult to remove; in the petroleum processing derivatives, the ethylene tar has advantages of less ash and low content of metal and non-metal impurities, however, the ethylene tar contains more unsaturated olefins and has poor thermal stability, so it is easy to be oxidized to introduce new impurities in the process of preparing porous carbon. In the prior art, light components in ethylene tar are usually removed and then the ethylene tar is used to prepare porous carbon. For example, the patent document CN106672966A discloses a method for preparing porous carbon from ethylene tar, the ethylene tar is subjected to pretreating in which light components are removed by n-heptane reflux, and then is subjected to pre-oxidation to obtain a precursor of a porous carbon material, then is subjected to template-based carbonization and pickling to obtain the porous carbon material, however, the preparation cost of the patent using the template method is high.

Therefore, how to prepare high-purity porous carbon materials and reduce the cost is the research focus for those skilled in the field.

### SUMMARY

In view of the above defects, the present application provides a preparation method of a porous carbon material, which can realize the preparation of porous carbon with high purity, and has the advantages of simple preparation process and low cost.

The present application further provides a porous carbon material, which is prepared by the above preparation method and has the advantages of high purity, good stability and the like.

The present application further provides an electric double layer capacitor, which uses the porous carbon material as an electrode, and has the advantages of high energy efficiency, good cycle stability and the like.

A first aspect of the present application is to provide a preparing method of a porous carbon material, including the following steps: choosing distillate of ethylene tar in a range of 250 °C~550 °C and performing hydrogenation treatment on the distillate to obtain hydrofined ethylene tar; performing pre-carbonization treatment on part of the hydrofined ethylene tar to obtain coke; mixing the remaining hydrofined ethylene tar and the coke to form a mixture, and performing activating treatment on the mixture to obtain the porous carbon material.

According to an embodiment of the present application, the pre-carbonization treatment is performed under an inert atmosphere, and temperature for the pre-carbonization treatment is 300 °C~800 °C.

According to an embodiment of the present application, a mass ratio of the coke to the remaining hydrofined ethylene tar is 1: (0.01-0.8).

According to an embodiment of the present application, the mixture is subjected to the activating treatment by means of using an activator including at least one of an alkaline compound, water vapor, and carbon dioxide.

According to an embodiment of the present application, conditions for the activating treatment are that the temperature is 600 °C~900 °C, the time is 0.5h~3h.

According to an embodiment of the present application, a distillate of the ethylene tar in a range of 350 °C~450 °C is chosen.

According to an embodiment of the present application, the mixture is subjected to the activating treatment to obtain primary porous carbon; and performing deoxidation refining treatment on the primary porous carbon is further included to obtain the porous carbon material.

According to an embodiment of the present application, the deoxidation refining treatment is performed in vacuum and reduction atmosphere, and conditions for the deoxidation refining treatment are that the vacuum degree is -0.1 MPa∼-0.01 MPa, the temperature is 300 °C~900 °C, and the time is 0.5h~3h.

A second aspect of the present application is to provide a porous carbon material, which is obtained by the above preparation method.

A third aspect of the present application is to provide an electrode of the electric double layer capacitor including the above porous carbon material.

The implementation of the present application has at least the following beneficial effects.

According to the preparation method of a porous carbon material provided in the present application, a distillate of ethylene tar in a range of 250 °C~550 °C is chosen to obtain the distillate in which impurities containing light components, ash and the like are removed. After the above distillate is subjected to the hydrogenation treatment, unsaturated structures such as sulfur and nitrogen are further removed, and the hydrofined ethylene tar with extremely low impurity content and good stability is obtained, which is not easy to be oxidized and deteriorated in subsequent treatment processes. In the present application, the coke obtained after pre-carbonization treatment is used as a main carbon source, and the remaining hydrofined ethylene tar is used as a modifier, and this modifier can not only shape the mixture, but also fill the gap between coke particles to improve the density of the product. In addition, the structure of the hydrofined ethylene tar is similar to that of coke, both of which can be uniformly mixed in subsequent calcination to promote the stability of the product without introducing new impurities. The preparation method of the porous carbon material provided in the present application also has the advantages of simple preparation method and high utilization rate of ethylene tar raw material, and batch preparation can be achieved and it is suitable for industrial production.

The porous carbon material provided in the present application, prepared by the above method, has the advantages of high purity and good stability, and can be used in the technical fields of supercapacitor, biomedicine, catalysis, etc., especially can be used as an electrode material in the electric double layer capacitor, so that the electric double layer capacitor has the advantages of high energy efficiency and good cycle stability.

### BRIEF DESCRIPTION OF DRAWINGS

FIG. 1 is a flowchart of the preparation method of a porous carbon material in an embodiment of the present application.
FIG. 2 is a charge-discharge curve of an electric double layer capacitor in Example 1.
FIG. 3 is a cyclic performance curve of an electric double layer capacitor in Example 3.

### DESCRIPTION OF EMBODIMENTS

The specific embodiments listed below only describe the principles and characteristics of the present application, and the examples cited are only used to explain the present application and do not limit the scope of the present application. Based on the embodiments of the present application, all other embodiments obtained by those skilled in the field without creative work fall within the scope of protection of the present application.

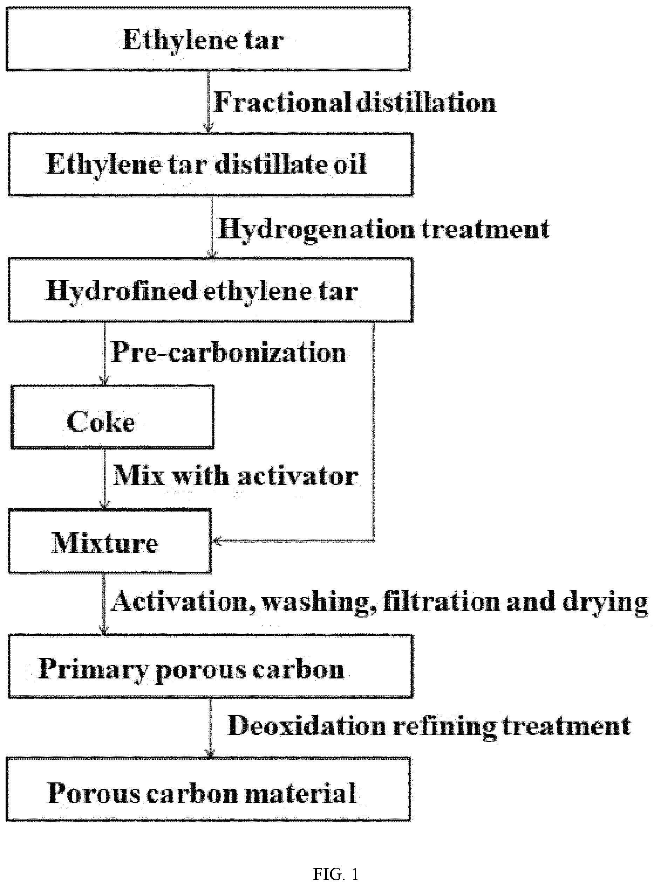

As shown is FIG. 1, the present application provides a preparing method of a porous carbon material, including following steps: choosing a distillate of ethylene tar in a range of 250 °C~550 °C and performing hydrogenation treatment on the distillate to obtain hydrofined ethylene tar; performing pre-carbonization treatment on part of the hydrofined ethylene tar to obtain coke; mixing the remaining hydrofined ethylene tar and the coke to form a mixture, and performing activating treatment on the mixture to obtain the porous carbon material.

According to the method provided in the present application, the hydrofined ethylene tar with low impurity content and high carbon content can be obtained by fractional distillation cutting and hydrogenation treatment. The tar obtained after pre-carbonization treatment of part of hydrofined ethylene tar is used as a carbon source, and the remaining hydrofined ethylene tar is used as a modifier to prepare the porous carbon material. Using the method of the present application, not only the deep processing and utilization of ethylene tar can be achieved, but also the purity of the porous carbon material can be improved. In addition, the method of the present application also has the advantages of low cost, simple operation, etc., can achieve batch preparation, and is suitable for industrial production.

The present application uses ethylene tar as a raw material of which sources are wide and the price is low. The ethylene tar in the present application is a product from high temperature condensation in the process of preparing ethylene by a cracking method. The sources of ethylene tar include, but are not limited to, ethylene tar produced by ethylene production units in oil refineries, small-scale experimental units for preparation of ethylene by cracking, and medium-sized experimental units for preparation of ethylene by cracking.

In some examples of the present application, the selected ethylene tar may be one or more mixtures, in which the mass content of carbon is more than 90%, the mass content of sulfur is less than 0.5%, the mass content of nitrogen is less than 0.5%, and the total mass content of metals (iron, aluminum, nickel, copper, etc.) is less than 500 mg/kg in ethylene tar, and preferably, the mass content of carbon is more than 92%, the mass content of sulfur is less than 0.2%, the mass content of nitrogen is less than 0.2%, and the total mass content of metals (iron, aluminum, nickel, copper, etc.) is less than 100 mg/kg.

Distillates of ethylene tar can be obtained by conventional fractional distillation methods, through the fractional distillation the light components, ash and other impurities in ethylene tar can be removed. The fractional distillation includes but is not limited to atmospheric distillation and vacuum distillation. The fractional distillation process is cut according to temperature, and the 250 °C~550 °C distillate of ethylene tar is cut, and preferably, the cutting point is 300 °C~500 °C, further 350 °C ~450 °C.

In the present application, the hydrofined ethylene tar with high carbon content and good stability is obtained by hydrogenation treatment on the distillate of ethylene tar to further remove the unsaturated structure such as sulfur and nitrogen, so as to avoid oxidative deterioration in subsequent treatments.

The above hydrogenation treatment includes, but is not limited to, fixed bed hydrogenation and slurry bed hydrogenation, that is, it can be performed in a fixed bed reactor or in a slurry bed reactor.

The above hydrogenation treatment can adopt conventional hydrogenation conditions in the field, such as a temperature of 300 °C~450 °C, a pressure of 10 MPa∼16 MPa, a space velocity of 1h⁻¹ and a hydrogen-oil ratio of 800:1.

The pre-carbonization treatment of the present application can be performed in an inert atmosphere, in which the inert atmosphere may be at least one of nitrogen, argon, helium and carbon dioxide.

In some embodiments, the temperature for the pre-carbonization treatment is 300 °C~800 °C, preferably 400 °C~550 °C.

The above pre-carbonization treatment can be performed in conventional calcination equipment, including but not limited to a sintering furnace such as a tubular furnace, and a box furnace, or a coking device.

In order to facilitate the mixing of subsequent reaction raw materials, crushing treatment is usually included after the pre-carbonization treatment, so that the particle size of coke is 0.1 µm~10mm, preferably 1 µm~1000 µm, and further 20 µm~200 µm.

The crushing treatment process may be performed in conventional crushing equipment, including, but not limited to, at least one of a mechanical grinder and an airflow grinder, preferably a mechanical grinder with an anti-metal contamination coating, in which the anti-metal contamination coating includes ceramic or tungsten carbide.

In the present application, the process of mixing the remaining hydrofined ethylene tar and coke to form a mixture can be performed in an inert atmosphere. In some embodiments, the mass ratio of coke to the remaining hydrofined ethylene tar is 1: (0.01-0.8), preferably 1: (0.05-0.2).

The mixing process includes, but is not limited to, manual mixing, mechanical mixing, etc., which preferably is operated in a closed mixing container with inert gas introduced or in a glove box in an inert atmosphere.

In the process of forming the mixture, the remaining hydrofined ethylene tar can be used as a modifier. On the one hand, it can play the binding role of binder, making coke shaped, thereby solving the problem of unstable structure of ordinary binders and introducing new impurities; it can also play the filling role of filler, filling to gaps between coke particles, thereby improving the density of the product. On the other hand, the remaining hydrofined ethylene tar is a precursor of coke, both of which have good compatibility and can be uniformly mixed in the subsequent calcination treatment, thereby solving the problem of uneven mixing in the traditional preparation of porous carbon materials, and also avoiding the introduction of new impurities, and being conducive to the formation of products with high purity and uniform and stable structure.

The activating treatment may be a conventional physical activation method or a chemical activation method, or a combination of both. In some embodiments, an activator is usually used to activate a mixture, and accordingly, the activator includes at least one of an alkaline compound, water vapor, and carbon dioxide. In a specific implementation process of the present application, an alkaline substance such as potassium hydroxide and so on can be used as an activator to perform chemical activation on a mixture formed after the mixing of the remaining hydrofined ethylene tar, coke and the alkaline substance, which is beneficial to increase the specific surface area of the porous carbon material. Water vapor or carbon dioxide can also be used as an activator for physical activation, in which physical activation can be achieved only by controlling the atmosphere in a furnace without adding alkaline substances in the mixing process, for example, the remaining hydrofined ethylene tar and coke can be mixed to form a mixture, and the mixture can be activated in an atmosphere containing water vapor or carbon dioxide. The specific surface area of the porous carbon material prepared by physical activation is relatively small, so the combination of physical activation and chemical activation is preferred.

In a specific implementation process of the present application, the remaining hydrofined ethylene tar, coke and an alkaline compound are mixed to form a mixture, in which the alkaline compound include at least one of potassium hydroxide, sodium hydroxide, sodium carbonate, potassium carbonate, zinc chloride, calcium hydroxide, and sodium bicarbonate. The mass ratio of coke to the alkaline compound is 1: (0~6), preferably 1: (1~3), and the alkaline compound may be a solid powder, for example, the particle size may be 0.1 µm~5 mm, preferably 20 µm~500 µm.

In the above specific implementation process, the alkaline compound is selected as an activator, and the hydrofined ethylene tar can also act as a coating agent, which can be uniformly coated on the surface of the activator, so as to prevent the deactivation caused by the contact between the activator and water and carbon dioxide in the air during material transfer, to avoid the escape of alkali metal atoms in the heating process of the activating treatment, and to help the improving of the activation efficiency, and the increasing of the specific surface area of porous carbon. In addition, the coating agent function of the hydrofined ethylene tar can prevent oxygen in the air from entering the mixture to cause the increase of oxygen content.

The porous carbon precursor in the present application may be columnar or massive. In order to get good molding products, molding treatment can usually be included before the activating treatment, and the molding treatment can be performed by using conventional equipment, such as an extruder, a pressing machine and so on. The mixture is subjected to a certain pressure by using an extruder or a pressing machine to form into columnar or massive shape.

In the present application, the temperature for the activating treatment is above 600 °C, preferably, the conditions for the activating treatment are that the temperature is 600 °C~900 °C, the pressure is 0.01 MPa~0.3 MPa, and the time is 0.5h~3h.

The activating treatment can be performed in an inert atmosphere, which includes at least one of nitrogen, argon, helium, carbon dioxide and water vapor.

The above activating treatment can be performed in conventional calcination equipment, including, but not limited to, an atmosphere furnace that satisfies the above atmosphere environment and its temperature reaches 600 °C and above.

The pressure of the above activating treatment is preferably between 0.1 MPa~0.3 MPa, for example, it can be performed under atmospheric pressure.

In a specific implementation process of the present application, in order to remove excess activator and other impurities, the activated product is usually washed, filtered, dried and ground after the activating treatment. Preferably, the activated product is washed in an acid solution at first, and then it is washed to neutral in pure water. The purpose of drying is to remove excess moisture, and the preferred drying temperature is 100 °C~200 °C. The grinding process can be performed in a mechanical grinder, and the preferred particle size after grinding is 2 µm-50 µm.

As shown in FIG. 1, in the present application, in order to further remove the oxygen element and volatile components, the mixture is subjected to activating treatment to obtain primary porous carbon, and the primary porous carbon is subjected to deoxidation refining treatment to obtain a porous carbon material.

In the above deoxidation refining treatment, the conditions for deoxidation refining treatment are that the vacuum degree is -0.1 MPa∼-0.01 MPa, preferably the vacuum degree is -0. 1MPa, the temperature is 300 °C ~ 900 °C, and the time is 0.5h~3h.

The above deoxidation refining treatment is performed in a vacuum reduction atmosphere and can be performed in a vacuum-operated atmosphere furnace or vacuum-operated reactor. For example, after the primary porous carbon is placed in a furnace, the furnace is sealed, and the air in the furnace is first drawn to vacuum, then the connection between the vacuum system and the furnace is cut off, and a reducing gas is slowly injected into the furnace, and heating up for making a reduction reaction is performed, the supply of the reducing gas is maintained until the end of the reaction and cooling down to room temperature is performed. After cooling, the product is taken out of the furnace and sealed and packaged to obtain a porous carbon material. Where, the time for vacuum in the furnace can be 120s~480s.

In the above deoxidation refining treatment, the reducing gas can be at least one of hydrogen, methane, ethylene, and propylene, and the flow rate of the reducing gas is preferably 1 mL/min~2000 mL/min. The reducing gas is preferably a reducing gas containing an inert gas with a volume fraction of 1%~50%, and the inert gas may be nitrogen, argon and the like.

In the present application, purification treatment such as deoxidation refining treatment can also be performed, and a method of vacuumizing at first and then filling a reducing gas can be carried out for hydrogenation and deoxygenation, which has high deoxidation efficiency and solves the problem of uneven and incomplete deoxidation in the ordinary atmospheric pressure replacement method.

The present application further provides a porous carbon material, which is prepared by the above preparation method, and has the advantages of high purity, uniform and stable structure, etc. It is especially suitable for supercapacitors, biomedicine, catalysis and other technical fields.

The porous carbon material has a specific surface area of up to 500 m²/g~3500 m²/g, a total pore volume of up to 0.1 cm³/g~5 cm³/g, an oxygen content of less than 1wt%, a ash content of not more than 0.1wt%, a metal content (iron, nickel, cobalt, copper, aluminum, sodium, potassium) of lower than 20 mg/kg, and a total metal content of lower than 50 mg/kg.

The present application further provides an electric double layer capacitor, which uses the porous carbon material as an electrode, has the advantages of high energy efficiency and good cycle stability. Specifically, the first discharge specific capacity of the electric double layer capacitor in an organic electrolyte system is not less than 20 F/g, or the first discharge specific capacity of the electric double layer capacitor in the inorganic electrolyte system is not less than 40 F/g.

In the above electric double layer capacitor, the electrode material can be prepared by mixing the porous carbon material, a binder and conductive carbon black according to a certain proportion to form a slurry, and then coating the slurry onto a substrate to form an electrode.

The preferred implementation method of the present application will be described in detail in combination with the embodiments below. It is to be understood that the following embodiments are given for illustrative purposes only and are not intended to limit the scope of the present application. Those skilled in the field may make various modifications and replacements to the present application without deviating from the purpose and spirit of the present application.

The experimental methods used in Examples and Comparative Examples of the present application, if not specified, are conventional methods, and the materials and reagents used in the Examples, if not specified, can be obtained from commercial channels.

### Example 1

A preparation method of a porous carbon material provided by the present embodiment includes the following steps:
(1) ethylene tar from an ethylene unit of Daqing Petrochemical Company is selected, and fractional distillation cutting is performed on the ethylene tar by a real boiling point distillation unit, and a distillate oil in a range of 350 °C ~ 450 °C is cut, and hydrogenation treatment is performed on the distillate oil by a fixed bed hydrogenation unit, where the conditions for the hydrogenation treatment are that the reaction temperature is 300 °C, the reaction pressure is 10 MPa, the space velocity is 1h⁻¹, the hydrogen/oil ratio is 800:1, so that hydrofined ethylene tar is obtained;
(2) part of the hydrofined ethylene tar is subjected to pre-carbonization treatment in a kettle-type coking reactor, where the atmosphere of the reactor is high purity nitrogen, the heating rate is 2 °C/min, the temperature is raised to 500 °C, and the treatment is made at the constant temperature for 480 min;
   the product at the bottom of the kettle is taken out and crushed by a ball mill whose ball mill tank and balls are made of tungsten carbide, so as to obtain coke of which the particle size D50 is 20-50 µm after grinding;
(3) nitrogen is introduced as a protective gas, coke and the remaining hydrofined ethylene tar are mixed to get a mixture, with potassium hydroxide used as an activator, in which the mass ratio of coke, potassium hydroxide and the remaining hydrofined ethylene tar is 1:2.5:0.2, and potassium hydroxide is a crushed powder with a D50 particle size range of 20-50 µm, the mixing device is a rotary mechanical mixer lined with tetrafluoroethylene;
   the mixture of the above three is pressed, by a powder tablet press under 5 MPa pressure, into a cylindrical billet with a diameter of 2 cm and a height of 1 cm;
(4) the billet is placed in a corundum crucible having a lid, and the crucible is placed in a tube furnace for activating treatment, in which the conditions for the activating treatment are as follows: the atmosphere is high purity nitrogen, the heating rate is 5 °C/min, the temperature is 800 °C, the time is 120 min, and the pressure is 0.01 MPa;
   the calcined product is taken out, poured into a hydrochloric acid solution having a mass fraction of 5% and stirred for 5 hours, filtered and washed repeatedly with pure water for 3 times, and finally the solid product is filtered and collected and dried at 100 °C for 24 hours;
(5) the dried product is placed in a quartz crucible and the crucible is placed in a quartz-tube vacuum-tube furnace for deoxidation refining treatment including: extracting air from the furnace to -0.1 MPa and maintaining the vacuum degree for 30 min, then slowly introducing a reducing gas (in which the volume ratio of hydrogen, ethylene to argon is 1:1:8, the flow rate is 10 mL/min) into the furnace, and performing heating at a heating rate of 5 °C/min to the temperature of 700 °C, and keeping the temperature for 120min; after the reaction is completed, natural cooling is made to obtain the porous carbon material.

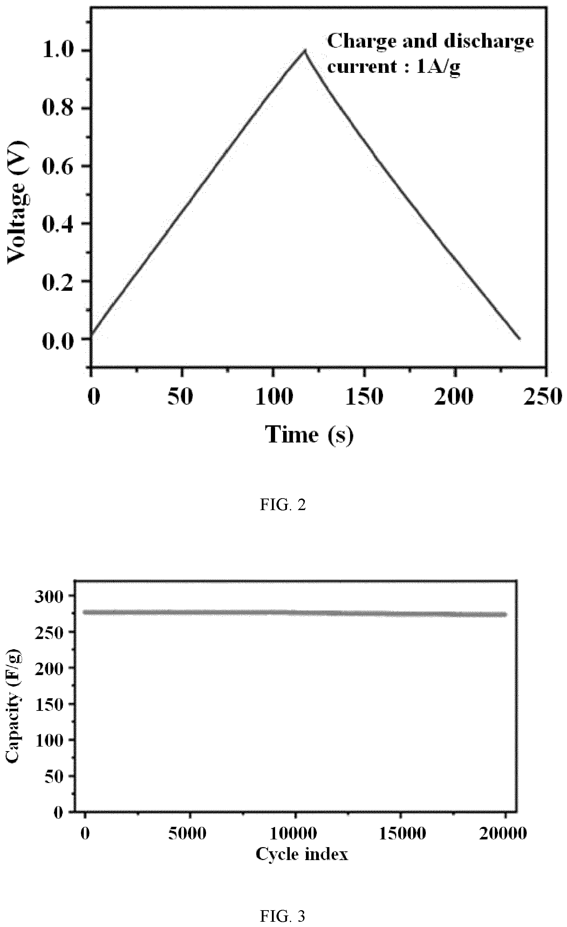

For an electric double layer capacitor provided in the present embodiment, the porous carbon material provided in Example 1 is used as an electrode material, the assembling of the electric double layer capacitor consists of the following steps:
1) the porous carbon material, a polytetrafluoroethylene binder, and conductive carbon black (JPD600, commercially purchased) are mixed according to the mass ratio of 9:0.5:0.5, with pure water used as a dispersant so as to obtain a slurry by stirring evenly;
2) the slurry is uniformly coated on a foam nickel electrode sheet having a diameter of 13 mm, and then dried in a vacuum oven at 120 °C for 6 h to obtain an electrode;
3) two electrodes with the same mass are taken, 6 mol/L of a potassium hydroxide solution is used as an electrolyte solution, glass fiber filter paper is used as a separator, a CR2032 button battery shell is used as a container, and a button battery sealing machine is used to assemble the electric double layer capacitor;
an electrochemical workstation is used to test the electrochemical performance of the electric double layer capacitor, and the test results are shown in FIG. 2 and FIG. 3.

### Example 2

The present embodiment provides a preparation method of a porous carbon material, including the following steps:
compared with Example 1, in step (3), "with potassium hydroxide used as an activator" is replaced with "with water vapor used as an activator"; in step (3), the molding process is replaced with "the mixture is extruded by an extruder into particles with a diameter of 2-5mm and a length of 2-5 mm to obtain a porous carbon precursor"; in step (4), the conditions of the activating treatment "the pressure is 0.01 MPa" is replaced with "the pressure is 0.02 MPa", and other conditions remain the same.

### Example 3

The present embodiment provides a preparation method of a porous carbon material, including the following steps:
compared with Example 1, the step (1) is replaced with "ethylene tar from an ethylene unit of Fushun petrochemical Company is selected, and distillation cutting is performed on the ethylene tar by a vacuum distillation unit, and a distillate oil in a range of 300 °C~350 °C is cut, and hydrogenation treatment is performed on the distillate oil by a slurry bed hydrogenation unit, where the conditions of the hydrogenation treatment are as follows: the temperature is 450 °C, the pressure is 16 MPa, the space velocity is 1h⁻¹, the hydrogen/oil ratio is 800:1, so that hydrofined ethylene tar is obtained". Other conditions remain the same;
in the electric double layer capacitor provided by the present embodiment, the porous carbon material of Example 1 is replaced with the porous carbon material prepared by Example 3, and other conditions remain the same.

### Example 4

A preparation method of a porous carbon material provided by the present embodiment includes the following steps that compared with the Example 1, the step (5) is removed and other conditions remain the same.

### Comparative Example 1

A preparation method of a porous carbon material provided by the present embodiment includes the following steps that compared with Example 1, the step (1) is removed, the step (2) is directly implemented with ethylene tar, and the remaining hydrofined ethylene tar is not added in step (3), and step (5) is removed, other conditions remain the same.

### Comparative Example 2

A preparation method of a porous carbon material provided by the present embodiment includes the following steps that compared with Example 1, the remaining hydrofined ethylene tar is not added in step (3), and step (5) is removed, and other conditions remain the same.

### Comparative Example 3

A preparation method of a porous carbon material provided by the present embodiment includes the following steps that compared with Example 2, the remaining hydrofined ethylene tar is not added in step (3), but it is replaced with pitch (commercially available, powdered, softening point is 250 °C), which is now commonly used in the industry, and is added as an additive with the same mass ratio, and step (5) is removed, that is, the deoxidation refining treatment is not performed, other conditions remain the same.

**Table 1 Physical properties of the porous carbon materials in Examples and Comparative Examples**

| Product index | | Example 1 | Example 2 | Example 3 | Example 4 | Comparative Example 1 | Comparative Example 2 | Comparative Example 3 |
|---|---|---|---|---|---|---|---|---|
| Physical property index | Specific surface area (cm²/g) | 2375 | 820 | 2312 | 2386 | 2098 | 2115 | 746 |
| | Ash wt% | 0.08 | 0.06 | 0.1 | 0.07 | 0.22 | 0.09 | 0.18 |
| Content of non-metal elements | N wt% | 0.02 | 0.04 | 0.03 | 0.05 | 0.13 | 0.02 | 0.1 |
| | S wt% | 0.08 | 0.07 | 0.11 | 0.08 | 0.31 | 0.12 | 0.18 |
| | O wt% | 0.19 | 0.14 | 0.16 | 0.86 | 2.1 | 1.21 | 1.08 |
| Content of metal elements (mg/kg) | Fe | 12 | 8 | 14 | 13 | 46 | 17 | 32 |
| | Ni | not detected | not detected | not detected | not detected | 12 | not detected | 14 |
| | Co | not detected | not detected | not detected | not detected | 8 | not detected | 3 |
| | Cu | 4 | 4 | 2 | 4 | 4 | 3 | 6 |
| | Al | 4 | 3 | not detected | 4 | 7 | 4 | 13 |

According to Table 1, it can be seen that the ash content, metal content and non-metal content of the porous carbon material in Comparative Example 1 are much higher than those in the Examples, indicating that the impurity content of the product can be greatly reduced after ethylene tar is subjected to cutting treatment and hydrogenation treatment. According to Examples 1 and 4, it is known that the oxygen content in the material can be further reduced through the deoxidation refining treatment. Compared with Example 1, in Comparative Example 2 alkali metal atoms may escape from the activator at high temperature because the activator is not coated with the hydrofined ethylene tar, and at the same ratio of the activator to the carbon source, the activation efficiency of the activator becomes worse, the specific surface area of the material decreases, and because the activator is not coated with the hydrofined ethylene tar, oxygen will enter into the mixture to result in the increase of oxygen content during the reaction, and the oxygen can no longer be removed without deoxidation treatment. In Comparative Example 3, due to the addition of pitch as the binder, its internal impurities are introduced into the product in the preparation process, and its oxygen content is higher, indicating that the coating effect of pitch is not as good as that of the hydrofined ethylene tar.

FIG. 2 shows a charge-discharge curve of the electric double layer capacitor in Example 1. Under 1A/g of charge-discharge current, the capacity of the capacitor is 238 F/g. The charge-discharge curve of the capacitor can maintain a good symmetry curve, and the curve does not bend, indicating that the electrode material shows a simple electric double layer adsorption process during charging and discharging, which is a pure physical process, and the electrolyte solution does not react with the electrode material, thereby proving that the content of impurities such as non-carbon elements in the porous carbon material is very low.

FIG. 3 is a cyclic performance curve of an electric double layer capacitor in Example 3, the electric double layer capacitor circulates 20, 000 times under 5 A/g of charge-discharge current, the capacity retention rate of the capacitor is 99%, and the adsorption behavior and desorption behavior occurred on the surface of the electrode material is highly reversible, indicating that the porous carbon material has low content of impurities, has very stable property, and has excellent recycling performance.

The preparation method of the porous carbon material provided in the present application can prepare the porous carbon material with low impurity content and high purity, and can make full use of ethylene tar and reduce the preparation process cost.

The preferable specific examples and experimental verification of the present application are described above in detail. It should be understood that those skilled in the field can make various modifications and changes according to the ideas of the present application without creative work. Therefore, all technical solutions that can be obtained by those skilled in the field through logical analysis, reasoning or limited experiments on the basis of the existing technologies in accordance with the ideas of the present application shall be within the scope of protection determined by the claims.

## Claims

1. A preparing method of a porous carbon material, comprising following steps:
choosing a distillate of ethylene tar in a range of 250 °C~550 °C and performing hydrogenation treatment on the distillate to obtain hydrofined ethylene tar;
performing pre-carbonization treatment on part of the hydrofined ethylene tar to obtain coke;
mixing the remaining hydrofined ethylene tar and the coke to form a mixture, and performing activating treatment on the mixture to obtain the porous carbon material.

2. The preparing method according to claim 1, wherein the pre-carbonization treatment is performed under an inert atmosphere, and temperature for the pre-carbonization treatment is 300 °C~800 °C.

3. The preparing method according to claim 1 or 2, wherein a mass ratio of the coke to the remaining hydrofined ethylene tar is 1: (0.01-0.8).

4. The preparing method according to any one of claims 1-3, wherein the mixture is subjected to the activating treatment by means of using an activator comprising at least one of an alkaline compound, water vapor, and carbon dioxide.

5. The preparing method according to any one of claims 1-4, wherein conditions for the activating treatment are that temperature is 600 °C~900 °C, and time is 0.5h~3h.

6. The preparing method according to any one of claims 1-5, wherein a distillate of the ethylene tar in a range of 350 °C~450 °C is chosen.

7. The preparing method according to any one of claims 1-6, wherein the mixture is subjected to the activating treatment to obtain primary porous carbon; and further comprising performing deoxidation refining treatment on the primary porous carbon to obtain the porous carbon material.

8. The preparing method according to claim 7, wherein the deoxidation refining treatment is performed in a vacuum and reduction atmosphere, and conditions for the deoxidation refining treatment are that a vacuum degree is -0.1 MPa∼-0.01 MPa, temperature is 300 °C~900 °C, and time is 0.5h~3h.

9. A porous carbon material, obtained by the preparation method according to any one of claims 1-8.

10. An electric double layer capacitor, wherein an electrode of the electric double layer capacitor comprises the porous carbon material according to claim 9.
